# EUROPÄISCHE PATENTSCHRIFT

(11) **EP 1 739 266 B1**
(45) Veröffentlichungstag und Bekanntmachung des Hinweises auf die Patenterteilung: **14.02.2018**
(21) Anmeldenummer: 06012106.8
(22) Anmeldetag: 13.06.2006
(51) Int. Cl.: B60J 1/17, E05F 15/695, E05F 15/697, E05F 15/41, E05F 17/00

(54) **Steuerungssystem für Fensterheber eines Kraftfahrzeugs**
Control system for a vehicle window lifter
Système de commande d'un lève-vitre de véhicule

(30) Priorität: 29.06.2005 DE 202005010174 U
(43) Veröffentlichungstag der Anmeldung: 03.01.2007
(73) Patentinhaber: Brose Fahrzeugteile GmbH & Co. Kommanditgesellschaft, Coburg, Max-Brose-Straße 1 96450 Coburg (DE)
(72) Erfinder: Übelein, Jörg, 96271 Grub am Forst (DE); Bopp, Bertram, 96047 Bamberg (DE)
(74) Vertreter: FDST Patentanwälte

(56) Entgegenhaltungen:
- DE-A1- 10 106 286
- DE-A1- 19 650 446
- DE-A1- 19 800 194

## Beschreibung

Die Erfindung betrifft ein Steuerungssystem für Fensterheber eines Kraftfahrzeugs.

Fensterheber in Kraftfahrzeugen dienen dazu eine Fensterscheibe innerhalb einer Fahrzeugkarosserie, innerhalb einer Schenktür, innerhalb einer Heckklappe oder innerhalb einer Schiebetür in ihrer Position zu verstellen. Um beispielsweise einen gewünschten Geschwindigkeitsverlauf zu erhalten, wird ein Motorstrom eines Antriebs des Fensterhebers durch einen Leistungstreiber, beispielsweise einen Leistungshalbleiter gesteuert. Weiterhin ist es wünschenswert die Position der Fensterscheibe zu sensieren, um die Verstellbewegung und/oder einen Kollisionsschutz in Abhängigkeit von der sensierten Position zu steuern.

Ein Beispiel für einen Fensterheber mit einem Antrieb ist in der deutschen Offenlegungsschrift DE 43 02 143 A1 beschrieben. Bei diesem Fensterheber weist der Antriebsmotor einen Rotor auf, der axial verschoben werden kann. Bei Abschalten des Antriebsstromes für den Antriebsmotor wird der Rotor in eine Verriegelungsposition gebracht, wodurch der Antriebsmotor und damit der Antrieb insgesamt gesperrt wird.

Die DE 102 53 643 A1 beruht auf dem Grundgedanken, es zu verhindern, dass mehrere Fensterheber gleichzeitig die ihnen zugeordnete Fensterscheibe vollständig schließen. Stattdessen wird es nur dem Fensterheber, der die Fensterscheibe als erstes schließt, ermöglicht, die Fensterscheibe so weit zu schließen, bis der Fensterhebermotor blockiert und der Blockierstrom fließt. Alle anderen Fensterhebermotoren werden so rechtzeitig abgeschaltet, dass die Fensterscheibe ihre vollständig geschlossene Stellung nicht erreicht, sondern nur eine annähernd geschlossene Stellung. Sobald eine Fensterscheibe in diesen Endbereich eintritt, wird von einem Steuergerät des entsprechenden Fensterhebers ein Sperrsignal ausgesandt, das über ein Bussystem an alle anderen Steuergeräte der Fensterheber übermittelt wird.

Aus der US 6 253 135 B1 ist ein Verfahren zur Steuerung mehrerer Fensterheber eines Kraftfahrzeugs bekannt. DE 102 08 323 A1 betrifft ein motorbetriebenes Fenstersystem für ein Fahrzeug. Das motorbetriebene Fenstersystem umfasst ein zwischen einer offenen und einer geschlossenen Position bewegliches Fenster. Das motorbetriebene Fenstersystem umfasst auch einen mit dem Fenster gekoppelten Motor, wobei der Motor selektiv die Bewegung des Fensters bewirkt. Das motorbetriebene Fenstersystem umfasst außerdem zumindest einen Schalter und einen Kommunikationsbus, der mit dem Motor gekoppelt ist. Das motorbetriebene Fenstersystem umfasst außerdem einen Prozessor, der mit zumindest dem Schalter oder dem Kommunikationsbus gekoppelt ist und dafür ausgelegt ist, selektiv zumindest ein Schließ- oder Öffnungssignal an zumindest den Schalter oder den Kommunikationsbus zu senden. Das motorbetriebene Fenstersystem umfasst außerdem einen Sensor, der mit dem Prozessor gekoppelt ist und Zustände erfasst, auf denen eine automatische Fensterschließung beruht.

In der DE 101 06 286 A1 wird weiter eine Antriebsanordnung für elektrisch verstellbare Komponenten eines Kraftfahrzeugs vorgeschlagen, wobei eine Steuerungsvorrichtung zur Steuerung von mindestens zwei Motoren zum Antrieb der verstellbaren Komponenten, z.B. einer elektrisch verstellbaren Fensterscheibe, vorgesehen ist. Insbesondere ist die Steuerungsvorrichtung zur Bestromung sowohl mit dem ersten Antrieb als auch mit dem zweiten Antrieb verbunden. Zur Steuerung sind weiter ein erster und ein zweiter Stromsensor eingesetzt, die zur Bestimmung einer Verstellposition des ersten bzw. des zweiten Antriebs dienen.

Der Erfindung liegt die Aufgabe zu Grunde ein Steuerungssystem anzugeben, das für Fensterheber eines Kraftfahrzeugs besonders geeignet und insbesondere möglichst einfach ausgebildet an Spezifikationen der Automobiltechnik angepasst ist.

Diese Aufgabe wird durch ein Steuerungssystem mit den Merkmalen des Anspruchs 1 oder mit den Merkmalen des Anspruchs 2 gelöst. Vorteilhafte Weiterbildungen sind Gegenstand von Unteransprüchen.

Demzufolge ist ein Steuerungssystem für einen ersten Fensterheber zur Verstellung einer ersten Fensterscheibe eines Kraftfahrzeugs und für einen zweiten Fensterheber zur Verstellung einer zweiten Fensterscheibe des Kraftfahrzeugs vorgesehen. Das Steuerungssystem weist einen ersten Antrieb zur Verstellung der ersten Fensterscheibe auf. Der Antrieb weist vorzugsweise einen mechanisch oder elektrisch kommutierten Elektromotor und vorteilhafterweise ein Getriebe auf, dass mit der Mechanik des Fensterhebers wirkverbunden ist, um die Fensterscheibe mittels elektromotorischer Kraft zwischen einer geöffneten Position und einer geschlossenen Position zu verstellen.

Zudem weist das Steuerungssystem einen zweiten Antrieb auf, der ebenfalls mittels elektromotorischer Kraft die Verstellung der zweiten Fensterscheibe ermöglicht. Weiterhin weist das Steuerungssystem eine Steuerungsvorrichtung auf, die zur Bestromung sowohl mit dem ersten Antrieb als auch mit dem zweiten Antrieb elektrisch verbunden ist. Die Steuerungsvorrichtung ist vorzugsweise ein elektrischer Schaltkreis, der aus mehreren Bauelementen aufgebaut ist und vorteilhafterweise Leistungstreiber, wie beispielsweise ein Relais, zum Treiben von Antriebsströmen aufweist.

Die Steuerungsvorrichtung weist einen ersten Sensor zur Bestimmung einer ersten Verstellposition des ersten Fensterhebers und einen zweiten Sensor zur Bestimmung einer zweiten Verstellposition des zweiten Fensterhebers auf. Vorteilhafterweise ist die Sensierung der Verstellposition indirekt, so dass nicht die Position der Fensterscheibe sondern eine Bewegung eines mit der Verstellbewegung der Fensterscheibe gekoppelten Elementes, insbesondere eine Drehbewegung einer Welle oder eines Elektromotors, sensiert wird. Die beiden Sensoren sensieren vorzugsweise eine von einer Bewegung des jeweiligen Antriebes abhängige Drehbewegung.

Der erste Sensor und der zweite Sensor beruhen auf unterschiedlichen physikalischen Wirkprinzipien. Ein Sensor zur Bestimmung der Verstellposition kann beispielsweise auf einem optischen, kapazitiven, magnetischen, resistiven oder kontaktiven Wirkprinzip beruhen.

Die Steuerungsvorrichtung ist mit dem ersten Antrieb in einer ersten Kraftfahrzeugtür und der zweite Antrieb außerhalb der ersten Kraftfahrzeugtür angeordnet. Beispielsweise ist der zweite Antrieb in einem Karosseriebereich oder in einer zweiten Kraftfahrzeugtür angeordnet. In einer vorteilhaften Ausgestaltungsvariante ist die Steuerungsvorrichtung zusammen mit dem ersten Antrieb als Baueinheit ausgebildet, die vorprüfbar ist und in einem Montageschritt verbaut werden kann.

Weiterhin wird die erfindungsgemäße Aufgabe durch ein Steuerungssystem gelöst, das zur Steuerung für eine erste Verstellvorrichtung zur Verstellung eines ersten verstellbaren Teils eines Kraftfahrzeugs mit einem ersten Antrieb und für eine zweite Verstelleinrichtung zur Verstellung eines zweiten verstellbaren Teils des Kraftfahrzeugs mit einem zweiten Antrieb eingerichtet ist. Das erste verstellbare Teil ist beispielsweise eine Kraftfahrzeugfensterscheibe, während das zweite verstellbare Teil beispielsweise ein Sonnenrollo oder ein Schiebetür ist. Vorteilhafterweise ist das Sonnenrollo oder die Kraftfahrzeugfensterscheibe in derselben Kraftfahrzeugtür vorzugsweise in der Schiebetür des Kraftfahrzeugs angeordnet.

Das Steuerungssystem weist eine Steuerungsvorrichtung auf. Die Steuerungsvorrichtung ist zur Bestromung sowohl mit dem ersten Antrieb als auch mit dem zweiten Antrieb elektrisch verbunden. Die Steuerungsvorrichtung weist einen ersten Sensor zur Detektion einer ersten Kollision zwischen dem ersten verstellbaren Teil und einem eingeklemmten Gegenstand und/oder zur Bestimmung einer Verstellposition des ersten verstellbaren Teils und einen zweiten Sensor zur Detektion einer zweiten Kollision zwischen dem ersten verstellbaren Teil und einem eingeklemmten Gegenstand und/oder zur Bestimmung einer Verstellposition des zweiten verstellbaren Teils auf. Der erste Sensor und der zweite Sensor beruhen dabei auf unterschiedlichen physikalischen Wirkprinzipien.

Die Steuerungsvorrichtung ist mit dem ersten Antrieb in einer ersten Kraftfahrzeugtür und der zweite Antrieb außerhalb der ersten Kraftfahrzeugtür angeordnet. Beispielsweise ist der zweite Antrieb in einem Karosseriebereich oder in einer zweiten Kraftfahrzeugtür angeordnet. In einer vorteilhaften Ausgestaltungsvariante ist die Steuerungsvorrichtung zusammen mit dem ersten Antrieb als Baueinheit ausgebildet, die vorprüfbar ist und in einem Montageschritt verbaut werden kann.

Bevorzugt sind der erste Sensor zur Sensierung einer Antriebsbewegung des ersten Antriebs und der zweite Sensor zur Sensierung einer Antriebsbewegung des zweiten Antriebs ausgebildet. Die Steuerungsvorrichtung ist vorteilhafterweise zur indirekten Erkennung eine Kollision, durch eine Bestimmung auf den Antrieb rückwirkender Einklemmkräfte ausgebildet, indem beispielsweise eine durch die Kollision bewirkte Abbremsung des jeweiligen Antriebs sensiert und ausgewertet wird.

Um Elektronik der Steuerungsvorrichtung weitestgehend zu integrieren ist in einer vorteilhaften Ausgestaltungsvariante der Erfindung vorgesehen, dass der erste Sensor und der zweite Sensor auf einem einzigen Schaltungsträger, insbesondere auf einer einzigen Leiterplatte der Steuerungsvorrichtung angeordnet sind. Ein Schaltungsträger ermöglicht dabei eine Befestigung der Sensoren und weiterer Bauelemente und eine elektrische Verbindung durch beispielsweise metallische Leiterbahnen aus Kupfer. Alternativ zu einer formfesten oder flexiblen Leiterplatte (Platine) beispielsweise aus Kunststoff, Harzen oder Keramik kann auch ein Schaltungsträger in Form eines mit isolierendem Kunststoff umspritzten Stanzgitters verwendet werden.

Der erste Sensor erfasst eine Drehbewegung des ersten Antriebs. Hierzu weist ein drehbewegliches Antriebselement, beispielsweise eine Welle eines Elektromotors einen Geber, beispielsweise einen optischen Reflektor auf. Der zweite Sensor erfasst hingegen ein auf einen Antriebsstrom und/oder auf eine Antriebsspannung des zweiten Antriebs aufmoduliertes Signal. Die Modulation erfolgt dabei bevorzugt durch die Drehbewegung des Elektromotors des zweiten Antriebs, vorteilhafterweise durch dessen mechanische Kommutierung. Der zweite Sensor ist dabei zur Demodulierung ausgebildet, indem dieser vorteilhafterweise einen Widerstand (shunt) oder eine Spule aufweist. Erfindungsgemäß beruht der erste Sensor auf einem magnetischen Wirkprinzip und der zweite Sensor auf einem elektrisch resistiven Wirkprinzip. Vorteilhafterweise ist der erste Sensor ein Hallsensor, der mit einem durch eine Antriebsbewegung des ersten Antriebs bewegten Magneten wirkverbunden ist, um die Antriebsbewegung zu sensieren. Der zweite Sensor ist vorteilhafterweise ein Widerstand, über den ein Motorstrom des zweiten Antriebs fließt. Ein derartiger Widerstand wird als Shunt-Widerstand bezeichnet. Dabei ist eine antriebsferne Anordnung des Shunt-Widerstands möglich, so dass die Antriebsbewegung des zweiten Antriebs durch Messung der am Shunt-Widerstand abfallenden Spannung vom zweiten Antrieb entfernt in der Steuerungsvorrichtung selbst erfolgen kann. Die Steuerungsvorrichtung weist in einer bevorzugten Weiterbildung einen ersten Leistungstreiber zur Steuerung eines ersten Antriebsstromes des ersten Antriebs und einen zweiten Leistungstreiber zur Steuerung eines zweiten Antriebsstromes des zweiten Antriebs auf. Ein Leistungstreiber ist beispielsweise ein Relais oder ein Leistungshalbleiter, wie ein Feldeffekttransistor.

Bevorzugt weist die Steuerungsvorrichtung eine Recheneinheit auf, die mit dem ersten Sensor und dem zweiten Sensor verbunden ist. Die Recheneinheit ist vorteilhafterweise ein Mikrocontroller oder ein anwenderspezifischer Schaltkreis (ASIC). Vorteilhafterweise sind zumindest Teile der Recheneinheit mit den Leistungstreibern auf einem Halbleiterchip als so genannte "smart-power"-Einheit integriert. Alternativ oder in Kombination ist vorteilhafterweise zumindest einer der beiden Sensoren mit der Recheneinheit in einem Bauelementegehäuse integriert.

In einer bevorzugten Weiterbildung ist vorgesehen, dass die Recheneinheit zur Detektion einer ersten Kollision der ersten Fensterscheibe mit einem Gegenstand oder Körperteil innerhalb eines ersten Verstellweges des ersten Fensterhebers in Abhängigkeit von Sensorsignalen des ersten Sensors und zur Detektion einer zweiten Kollision der zweiten Fensterscheibe mit einem Gegenstand oder Körperteil innerhalb eines zweiten Verstellweges des zweiten Fensterhebers in Abhängigkeit von Sensorsignalen des zweiten Sensors eingerichtet ist. Die Signale des ersten Sensors und des zweiten Sensors werden hierbei zur Bestimmung einer Kollision ausgewertet.

Werden beide Antriebe zeitgleich bewegt, ist die Recheneinheit zudem zur parallelen Auswertung beider Sensorsignale ausgebildet, so dass im Falle einer Kollision zumindest einer der beiden Antriebe angehalten und gegebenenfalls zum Reversieren in die Gegenrichtung bestromt wird. Vorzugsweise ist die Recheneinheit daher zur Steuerung einer gleichzeitigen Verstellung des ersten Antriebs und des zweiten Antriebs eingerichtet. Die gemessenen Signale der beiden Sensoren werden dabei vorteilhafterweise in die Recheneinheit eingelesen und der jeweiligen Verstellbewegung zugeordnet.

In einer Ausgestaltungsvariante ist die Steuerungsvorrichtung in ein Gehäuse, insbesondere in ein Getriebegehäuse des ersten Antriebs oder in ein, an einen Öffnungsbereich des Getriebegehäuses befestigtes Elektronikgehäuse integriert. Dabei weist die Steuerungsvorrichtung einen elektrischen Anschluss für den zweiten Antrieb auf. Der elektrische Anschluss ist beispielsweise ein Stecker für einen Kabelbaum eines Kraftfahrzeugs, der zwei elektrische Kabel zu dem zweiten Antrieb beinhaltet.

Gemäß einer Weiterbildung ist die Steuerungsvorrichtung über einen Bus, insbesondere einen CAN-Bus oder einen LIN-Bus, mit einer weiteren elektrischen Vorrichtung des Kraftfahrzeugs verbunden. Beispielsweise ist diese weitere elektrische Vorrichtung ein Zentralsteuergerät des Kraftfahrzeugs. Vorzugsweise ist diese weitere elektrische Vorrichtung jedoch eine weitere Steuerungsvorrichtung, die zur Bestromung eines dritten Fensterheberantriebs und vorteilhafterweise auch eines vierten Fensterheberantriebs ausgebildet ist.

Im Folgenden wird die Erfindung in Ausführungsbeispielen anhand von Zeichnungen näher erläutert.

Dabei zeigen
- Fig. 1: ein Kraftfahrzeug mit zwei in Explosionszeichnung dargestellten Fensterhebern,
- Fig. 2: ein Kraftfahrzeug mit vier in Explosionszeichnung dargestellten Fensterhebern, und
- Fig. 3: einen ersten Antrieb und einen zweiten Antrieb für einen Fensterheber.

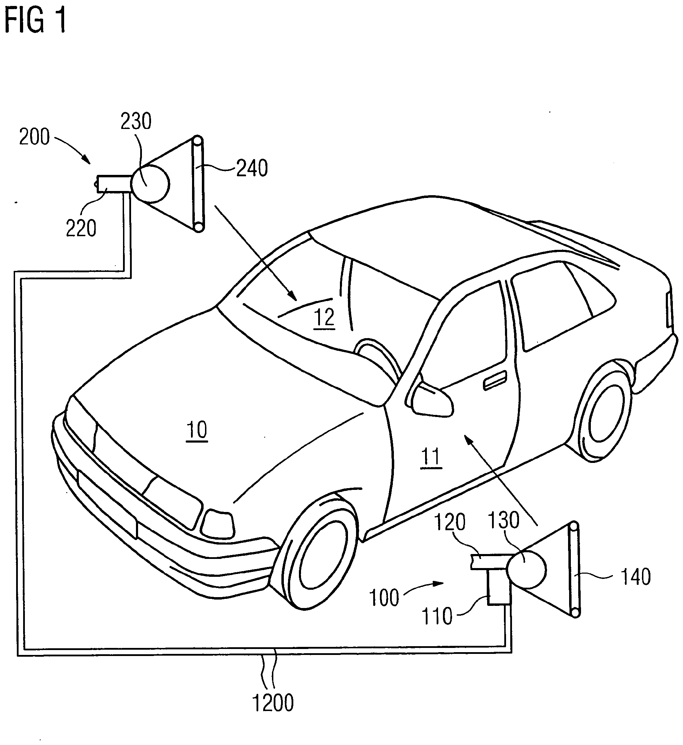

In Fig. 1 ist ein erstes Ausführungsbeispiel dargestellt. In diesem Ausführungsbeispiel weist ein Kraftfahrzeug 10 lediglich eine Fahrertür 11 und eine Beifahrertür 12 auf. Dieser so genannte Zweitürer weist hingegen keine hinteren Schwenktüren auf. Die hinteren Fensterscheiben sind entweder unbeweglich oder durch einen nicht dargestellten manuellen Fensterheber, beispielsweise mittels einer Kurbel manuell verstellbar.

Die Fensterscheiben der vorderen Türen 11 und 12 sind hingegen mit jeweils einem Fensterheber 140 beziehungsweise 240 mechanisch gekoppelt. Die Fensterhebermechanik ist wiederum mit einem Antrieb 100 beziehungsweise 200 mechanisch gekoppelt. Mittels des Antriebs 100, 200 kann die jeweilige Fensterscheibe daher mit elektromotorischer Kraft zwischen eine Öffnungs- und einer Schließposition und auch in jede beliebige Zwischenposition verstellt werden.

Der Antrieb 100, 200 weist hierzu einen Elektromotor 120, 220 und ein Getriebegehäuse 130, 230 mit einem Getriebe auf. Zur Steuerung eines ersten Antriebsstromes sowohl durch den ersten Antriebsmotor 120 als auch zur Steuerung eines zweiten Antriebsstromes durch den zweiten Antriebsmotor ist eine Steuerungsvorrichtung 110 vorgesehen. Die Steuerungsvorrichtung weist elektronische Bauelemente zur Steuerung auf. Dabei ist die Steuerungsvorrichtung mit einem Stromanschluss des ersten Elektromotors 120 und über ein zumindest zweiadriges Kabel 1200 mit einem Stromanschluss des zweiten Elektromotors 220 leitend verbunden.

Dabei werden die Vorteile erzielt, dass je nach Verbauort des jeweiligen Fensterhebermotors unterschiedliche Sensorlösung optimiert genutzt werden können. Bei motorintegrierten Türsteuergeräten ist das Prinzip der Hallsensorik besonders einfach und damit kostengünstig. Ist der Verbauort des Fensterhebermotors hinsichtlich des Türsteuergeräts hingegen entfernt, so ist eine Modulierung eines Signal auf den Motorstrom hingegen günstiger, da keine zusätzlichen Leitungen für einen Sensor verlegt werden müssen. Es die Verwendung von unterschiedlichen Wirkprinzipien der Sensoren ermöglicht eine einfache und damit kostengünstige Integration unterschiedlicher Sensoren in ein Gehäuse. Weiterhin bietet die Verwendung von Sensoren, die unterschiedlichen Wirkprinzipien beruhen den weiteren Vorteil, dass durch diese kombinierte Verwendung unterschiedlicher Sensoren, die Sensoren zur Optimierung der Prozessorlast ausgewählt werden können. Beispielsweise benötigt ein Hallsensor aufgrund der geringeren Anzahl von Rechenschritten eine geringere Prozessorlast als zur Auswertung von Stromwelligkeiten eines entfernt angeordneten Antriebs. Demzufolge kann derselbe Prozessor neben der Auswertung der Stromwelligkeiten gleichzeitig die einfacher auszuwertenden Hallsignalflanken eines Hallsensors auswerten, so dass kein überdimensionierter Mikrocontroller verwendet werden muss.

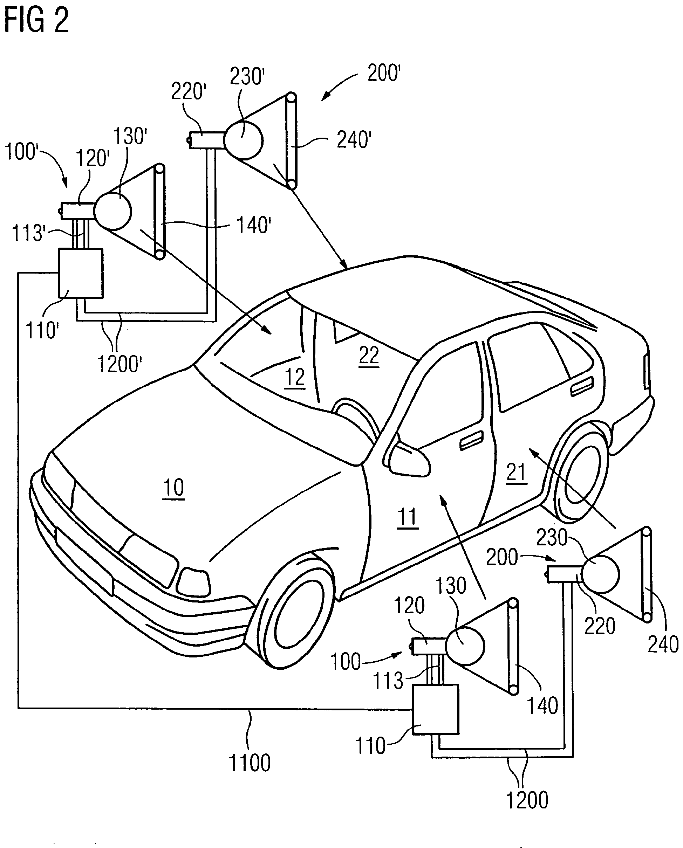

Fig. 2 zeigt ein zweites Ausführungsbeispiel. In diesem Ausführungsbeispiel der Fig. 2 weist das Kraftfahrzeug 10 zusätzlich zur Fahrertür 11 und zur Beifahrertür 12 zwei hintere Schwenktüren 21 und 22 auf. Jede Tür 11, 12, 21, 22 weist einen Fensterheber 140, 240, 140' und 240' auf. In der Fahrertür 11 ist eine Steuerungsvorrichtung 110 angeordnet, die über ein zumindest zweiadriges Kabel 1200 auch die hintere Tür 21 auf der Fahrerseite steuert. Analog ist in der Beifahrertür eine weitere Steuerungsvorrichtung 110' angeordnet, die über ein zumindest zweiadriges Kabel 1200' auch die hintere Tür 22 auf der Beifahrerseite steuert.

Die Steuerungsvorrichtung 110 und die weitere Steuerungsvorrichtung 110' sind über eine CAN-Bus-Verbindung 1100 des Kraftfahrzeugs 10 miteinander wirkverbunden. Die Steuerungsvorrichtung 110 weist vorzugsweise eine Bedienvorrichtung auf, wobei mit mindestens einem Bedienelement auch eine (Fern-) Verstellung einer Fensterscheibe der Beifahrerseite möglich ist.

Die Steuerungsvorrichtung 110 ist über eine Elektronik-Motor-Schnittstelle 113 mit dem Antrieb 100 gekoppelt. Diese Elektronik-Motor-Schnittstelle 113 ist dabei zur Übertragung eines Sensorsignals und zur Übertragung des Motorstromes zwischen der Steuerungsvorrichtung 110 und dem Antrieb 100 ausgebildet. Hierzu weist die Schnittstelle 113 vier oder mehr elektrische und/oder magnetische Leitungen auf. Analoges gilt für die Elektronik-Motor-Schnittstelle 113' zwischen der weiteren Steuerungsvorrichtung 110' und dem weiteren Antrieb 100'.

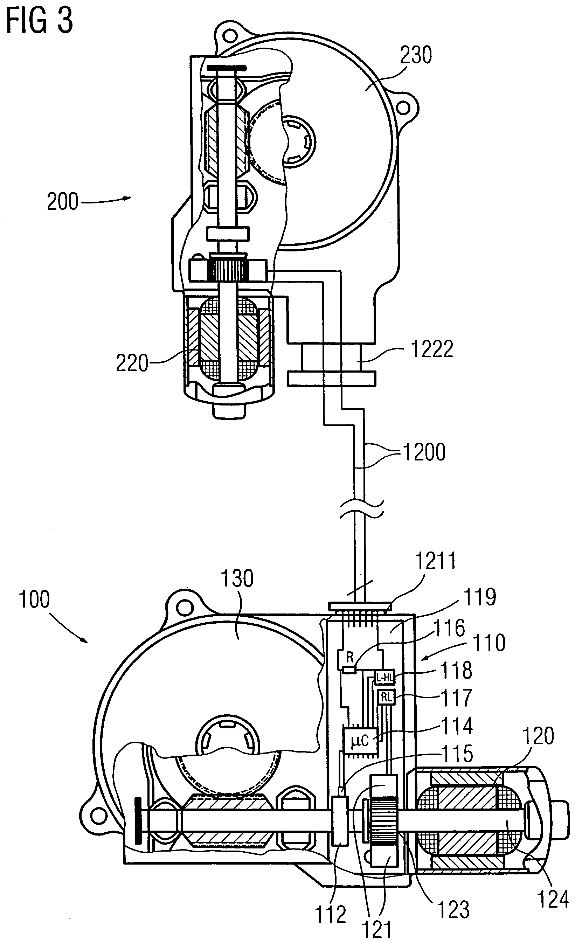

Alternativ zu einer Elektronik-Motor-Schnittstelle (113) mittels Kabel ist in Fig. 3 eine integratives Ausführungsbeispiel schematisch dargestellt. In das Getriebegehäuse 130 des ersten Antriebs 100 ist eine rechteckige Platine 119 der Steuerungsvorrichtung 110 eingeschoben und verrastet. Die Steuerungsvorrichtung 110 weist daher eine im Getriebegehäuse 130 integrierte Steckerverbindung 1211 auf, mittels derer der zweite Antrieb 200 mit der Steuerungsvorrichtung 110 über ein Kabel 1200 und über einen weiteren Stecker 1222 im zweiten Getriebegehäuse 230 des zweiten Antriebs 200 elektrisch verbunden ist.

Zur Bestromung des ersten Elektromotors 120 sind auf der Platine 119 zwei Bürstenhalter mit jeweils einer gehaltenen Bürste 121 angelötet. Die Bürsten wirken zur Bestromung dabei mit einem Kommutator 123 des Elektromotors 120 zusammen. Die Bürsten 121 sind über elektrische Kupferleiter der Platine 119 mit einem Relais 117 verbunden. Das Relais 117 ist zur Steuerung mit einem Mikrocontroller 114 verbunden und durch diesen ansteuerbar. Weiterhin ist auf der Platine ein weiterer Leistungsschalter in Form eines Leistungsfeldeffekttransistors 118 vorgesehen, der zur Steuerung des Antriebsstromes des zweiten Antriebs 200 ebenfalls mit dem Mikrocontroller 114 verbunden ist.

Weiterhin sind auf der Platine 119 der Steuerungsvorrichtung 110 ein erster Sensor 115 und ein zweiter Sensor 116 angelötet und mit dem Mikrocontroller 114 zur Auswertung der Sensorsignale verbunden. Der erste Sensor 115 ist mit dem ersten Antrieb 100 wirkverbunden, um eine erste Verstellposition des ersten Fensterhebers 140 zur sensieren. Hierzu ist auf einer Motorwelle 124 des ersten Elektromotors 120 ein Ringmagnet 112 befestigt, der eine Anzahl von magnetischen Polen aufweist, die durch eine Drehbewegung der Motorwelle 124 ein in der Polarität wechselndes Magnetfeld in dem als Hallsensor 115 konzipierten ersten Sensor bewirken. Das physikalische Wirkprinzip dieses ersten Sensors 115 ist daher der Magnetismus.

Mittels des zweiten Sensors 116 soll die Verstellposition der, mit dem zweiten Antrieb 200 verbundenen, zweiten Fensterscheibe ermittelt werden. Der zweite Sensor 116 ist ein Messwiderstand 116 mit einem Wert von wenigen Milli-Ohm. Dem Messwiderstand 116 liegt daher als physikalisches Wirkprinzip ein elektrisch resistives Wirkprinzip zu Grunde. Der Motorstrom durch den zweiten Antrieb 200 fließt daher über den Messwiderstand 116, über den Leistungsfeldeffekttransistor 118 als Leistungstreiber und eine elektrische Verbindung 1211, 1200 und 1222 zum Motor 220. Die elektrische Verbindung 1211, 1200 und 1222 kann dabei ein Bestandteil eines komplexeren, in den Figuren nicht dargestellten Kabelbaums des Kraftfahrzeugs 10 sein.

Zur Bestimmung einer Verstellposition der durch den zweiten Antrieb 200 angetriebenen Fensterscheibe wird beispielsweise ein Verfahren zum Ermitteln der Drehzahl und/oder des Drehwinkels bei mechanisch kommutierten Gleichstrommotoren aus dem Zeitverlauf der bei der Kommutierung auftretenden Welligkeit (Ripple) des mit dem zweiten Sensor 116 gemessenen Motorstroms verwendet. Die Ermittlung wird durch ein parallel dazu arbeitendes Motorzustandsmodell ergänzt und kontrolliert, dem die elektromechanischen Motorengleichungen zugrunde liegen. Aus dem Motorstrom und der Motorspannung wird ein wahrscheinlicher Wert der aktuellen Drehzahl extrapoliert sowie ein zulässiger Soll-Wertebereich der nächsten Kommutierung bestimmt. Kann im Soll-Wertebereich kein Kommutierungszeitpunkt bestimmt werden, wird der extrapolierte Wert verwendet. Anderenfalls wird aus dem im Soll-Wertebereich erfassten Kommutierungszeitpunkt die aktuelle Drehzahl genau bestimmt. Die für das Motorzustandsmodell erforderliche motorspezifische und lastabhängige Größe kann fest vorgegeben werden oder nach der Detektion von Kommutierungsvorgängen jeweils an die aktuelle Drehzahl angepasst werden.

### Bezugszeichenliste

- 10: Kraftfahrzeug
- 11, 12, 21, 22: Kraftfahrzeugtür
- 100, 100', 200, 200': Antrieb, Fensterheberantrieb
- 110, 110': Steuerungsvorrichtung, Elektronik
- 112: Ringmagnet
- 113, 113': Elektronik-Motor-Schnittstelle
- 114, µC: Mikrocontroller, ASIC, Recheneinheit
- 115: Hallsensor
- 116, R: Messwiderstand, Shunt-Widerstand
- 117, RL: Leistungstreiber, Relais
- 118, L-HL: Leistungstreiber, Leistungstransistor, MOSFET-Brücke
- 119: Schaltungsträger, Leiterplatte, Platine
- 120, 120', 220, 220': Antriebsmotor, Elektromotor
- 121: Bürste
- 123: Kommutator
- 124: Motorwelle
- 130, 230, 130', 230': Getriebegehäuse
- 140, 240, 140', 240': Fensterheber
- 1100: Bus, CAN-Bus, LIN-Bus
- 1200, 1200': Kabel
- 1211, 1222: elektrischer Anschluss, Steckerverbindung

## Patentansprüche

1. Steuerungssystem für einen ersten Fensterheber (140, 140') zur Verstellung einer ersten Fensterscheibe eines Kraftfahrzeugs mit einem ersten Antrieb (100, 100') des Steuerungssystems und für einen zweiten Fensterheber (240, 240') zur Verstellung einer zweiten Fensterscheibe des Kraftfahrzeugs mit einem zweiten Antrieb (200, 200') des Steuerungssystems,
- mit einer Steuerungsvorrichtung (110, 110'), die zur Bestromung sowohl mit dem ersten Antrieb (100, 100') als auch mit dem zweiten Antrieb (200, 200') elektrisch verbunden ist, wobei die Steuerungsvorrichtung (110, 110') einen ersten Sensor (115) zur Bestimmung einer ersten Verstellposition des ersten Fensterhebers (140, 140') und einen zweiten Sensor (116) zur Bestimmung einer zweiten Verstellposition des zweiten Fensterhebers (240, 240') aufweist,
**dadurch gekennzeichnet,**
- **dass** der erste Sensor (115) und der zweite Sensor (116) auf unterschiedlichen physikalischen Wirkprinzipien beruhen,
- **dass** der erste Sensor (115) auf einem magnetischen Wirkprinzip und der zweite Sensor (116) auf einem elektrisch resistiven Wirkprinzip beruhen und/oder der erste Sensor (115) eine Drehbewegung des ersten Antriebs (100, 100') und der zweite Sensor (116) ein auf einen Antriebsstrom und/- oder eine Antriebsspannung des zweiten Antriebs (200, 200') aufmoduliertes Signal erfassen, und
- **dass** die Steuerungsvorrichtung (110) mit dem ersten Antrieb (100) in einer ersten Kraftfahrzeugtür (11) und der zweite von der Steuerungsvorrichtung (110) gesteuerte Antrieb (200) von der Steuerungsvorrichtung (110) entfernt außerhalb der ersten Kraftfahrzeugtür (11) angeordnet sind.

2. Steuerungssystem für eine erste Verstellvorrichtung (140, 140') zur Verstellung eines ersten verstellbaren Teils eines Kraftfahrzeugs mit einem ersten Antrieb (100, 100') des Steuerungssystems und für eine zweite Verstelleinrichtung (240, 240') zur Verstellung eines zweiten verstellbaren Teils des Kraftfahrzeugs mit einem zweiten Antrieb (200, 200') des Steuerungssystems,
- mit einer Steuerungsvorrichtung (110, 110'), die zur Bestromung sowohl mit dem ersten Antrieb (100, 100') als auch mit dem zweiten Antrieb (200, 200') elektrisch verbunden ist, wobei die Steuerungsvorrichtung (110, 110') einen ersten Sensor (115) zur Detektion einer ersten Kollision des ersten verstellbaren Teils (140, 140') und einen zweiten Sensor (116) zur Detektion einer zweiten Kollision des zweiten verstellbaren Teils (240, 240') aufweist,
**dadurch gekennzeichnet,**
- **dass** der erste Sensor (115) und der zweite Sensor (116) auf unterschiedlichen physikalischen Wirkprinzipien beruhen,
- **dass** der erste Sensor (115) auf einem magnetischen Wirkprinzip und der zweite Sensor (116) auf einem elektrisch resistiven Wirkprinzip beruhen und/oder der erste Sensor (115) eine Drehbewegung des ersten Antriebs (100, 100') und der zweite Sensor (116) ein auf einen Antriebsstrom und/- oder eine Antriebsspannung des zweiten Antriebs (200, 200') aufmoduliertes Signal erfassen, und
- **dass** die Steuerungsvorrichtung (110) mit dem ersten Antrieb (100) in einer ersten Kraftfahrzeugtür (11) und der zweite von der Steuerungsvorrichtung (110) gesteuerte Antrieb (200) von der Steuerungsvorrichtung (110) entfernt außerhalb der ersten Kraftfahrzeugtür (11) angeordnet sind.

3. Steuerungssystem nach zumindest einem der Ansprüche 1 oder 2, bei dem der erste Sensor (115) und der zweite Sensor (116) auf einem einzigen Schaltungsträger, insbesondere auf einer einzigen Leiterplatte (119) der Steuerungsvorrichtung (110) angeordnet sind.

4. Steuerungssystem nach einem der vorhergehenden Ansprüche, bei dem die Steuerungsvorrichtung (110, 110') einen ersten Leistungstreiber (117) zur Steuerung eines ersten Antriebsstromes des ersten Antriebs (100, 100') und einen zweiten Leistungstreiber (118) zur Steuerung eines zweiten Antriebsstromes des zweiten Antriebs (200, 200') aufweist.

5. Steuerungssystem nach einem der vorhergehenden Ansprüche, bei dem die Steuerungsvorrichtung (110) eine Recheneinheit (114), insbesondere einen Mikrocontroller, aufweist, die mit dem ersten Sensor (115) und dem zweiten Sensor (116) verbunden ist und insbesondere zur zeitgleichen Auswertung des ersten Sensors (115) und des zweiten Sensors (116) eingerichtet ist.

6. Steuerungssystem nach Anspruch 5, bei dem die Recheneinheit (114)
- zur Detektion einer ersten Kollision der ersten Fensterscheibe mit einem Gegenstand oder Körperteil innerhalb eines ersten Verstellweges des ersten Fensterhebers (140, 140') in Abhängigkeit von einem Sensorsignal des ersten Sensors (115) und
- zur Detektion einer zweiten Kollision der zweiten Fensterscheibe mit einem Gegenstand oder Körperteil innerhalb eines zweiten Verstellweges des zweiten Fensterhebers (240, 240') in Abhängigkeit von einem Sensorsignal des zweiten Sensors (116)
eingerichtet ist.

7. Steuerungssystem nach Anspruch 6, bei dem die Recheneinheit (114) zur Steuerung einer gleichzeitigen Verstellung, insbesondere einer automatischen Verstellung, des ersten Antriebs (100, 100') und des zweiten Antriebs (200, 200') eingerichtet ist.

8. Steuerungssystem nach einem der vorhergehenden Ansprüche, bei dem die Steuerungsvorrichtung (110) in ein Gehäuse (130) des ersten Antriebs (100) integriert ist und bei dem die Steuerungsvorrichtung (110) einen elektrischen Anschluss (1211) für den zweiten Antrieb (200) aufweist.

9. Steuerungssystem nach einem der vorhergehenden Ansprüche, bei dem die Steuerungsvorrichtung in einem separaten Gehäuse in der ersten Tür des Kraftfahrzeugs angeordnet ist, und bei dem die Steuerungsvorrichtung einen elektrischen Anschluss für den ersten Antrieb (100) und für den zweiten Antrieb (200) aufweist.

10. Steuerungssystem nach einem der vorhergehenden Ansprüche, bei dem die Steuerungsvorrichtung (110) über einen Bus (1100) mit einer weiteren elektrischen Vorrichtung des Kraftfahrzeugs, insbesondere mit einer weiteren Steuerungsvorrichtung (110') zur Bestromung eines Fensterheberantriebs (100') verbunden ist.

## Claims

1. Control system for a first window lifter (140, 140') for adjusting a first window pane of a motor vehicle using a first drive (100, 100') of the control system and for a second window lifter (240, 240') for adjusting a second window pane of the motor vehicle using a second drive (200, 200') of the control system,
- having a control device (110, 110') which is electrically connected to both the first drive (100, 100') and the second drive (200, 200') for energisation, wherein the control device (110, 110') has a first sensor (115) for determining a first adjustment position of the first window lifter (140, 140') and a second sensor (116) for determining a second adjustment position of the second window lifter (240, 240'),
**characterised in that**,
- the first sensor (115) and the second sensor (116) are based on different physical operational principles,
- the first sensor (115) is based on a magnetic operational principle and the second sensor (116) is based on an electrically resistive operational principle, and/or the first sensor (115) detects a rotational movement of the first drive (100, 100') and the second sensor (116) detects a signal which is modulated onto a drive current and/or a drive voltage of the second drive (200, 200'), and
- the control device (110) is arranged with the first drive (100) in a first motor vehicle door (11), and the second drive (200) which is controlled by the control device (110) is arranged remote from the control device (110) outside the first motor vehicle door (11).

2. Control system for a first adjustment device (140, 140') for adjusting a first adjustable part of a motor vehicle using a first drive (100, 100') of the control system and for a second adjusting means (240, 240') for adjusting a second adjustable part of the motor vehicle using a second drive (200, 200') of the control system,
- having a control device (110, 110') which is electrically connected to both the first drive (100, 100') and the second drive (200, 200') for energisation, wherein the control device (110, 110') has a first sensor (115) for detecting a first collision of the first adjustable part (140, 140') and a second sensor (116) for detecting a second collision of the second adjustable part (240, 240'),
**characterised in that**,
- the first sensor (115) and the second sensor (116) are based on different physical operational principles,
- the first sensor (115) is based on a magnetic operational principle and the second sensor (116) is based on an electrically resistive operational principle, and/or the first sensor (115) detects a rotational movement of the first drive (100, 100') and the second sensor (116) detects a signal which is modulated onto a drive current and/or a drive voltage of the second drive (200, 200'), and
- the control device (110) is arranged with the first drive (100) in a first motor vehicle door (11), and the second drive (200) which is controlled by the control device (110) is arranged remote from the control device (110) outside of the first motor vehicle door (11).

3. Control system according to at least one of claims 1 or 2, in which the first sensor (115) and the second sensor (116) are arranged on a single circuit carrier, in particular on a single circuit board (119) of the control device (110).

4. Control system according to one of the preceding claims, in which the control device (110, 110') has a first power driver (117) for controlling a first drive current of the first drive (100, 100') and a second power driver (118) for controlling a second drive current of the second drive (200, 200').

5. Control system according to one of the preceding claims, in which the control device (110) has a computer unit (114), in particular a microcontroller, which is connected to the first sensor (115) and the second sensor (116) and is configured, in particular, for simultaneous evaluation of the first sensor (115) and the second sensor (116).

6. Control system according to claim 5, in which the computer unit (114) is configured
- to detect a first collision of the first window pane with an object or body part within a first adjustment path of the first window lifter (140, 140') depending on a sensor signal of the first sensor (115) and
- to detect a second collision of the second window pane with an object or body part within a second adjustment path of the second window lifter (240, 240') depending on a sensor signal of the second sensor (116).

7. Control system according to claim 6, in which the computer unit (114) is configured to control a simultaneous adjustment, in particular an automatic adjustment, of the first drive (100, 100') and the second drive (200, 200').

8. Control system according to one of the preceding claims, in which the control device (110) is integrated in a housing (130) of the first drive (100), and in which the control device (110) has an electrical connection (1211) for the second drive (200).

9. Control system according to one of the preceding claims, in which the control device is arranged in a separate housing in the first door of the motor vehicle, and in which the control device has an electrical connection for the first drive (100) and for the second drive (200).

10. Control system according to one of the preceding claims, in which the control device (110) is connected to a further electrical device of the vehicle, in particular to a further control device (110'), for energisation of a window lifter drive (100') via a bus (1100).

## Revendications

1. Système de commande pour un premier lève-vitre (140, 140') destiné à déplacer une première vitre d'un véhicule automobile à l'aide d'un premier entrainement (100, 100') du système de commande, et pour un deuxième lève-vitre (240, 240') destiné à déplacer une deuxième vitre du véhicule automobile à l'aide d'un deuxième entrainement (200, 200') du système de commande, le système comprenant
- un dispositif de commande (110, 110'), qui, pour l'alimentation en courant, est relié électriquement aussi bien au premier entraînement (100, 100') qu'au deuxième entrainement (200, 200'), le dispositif de commande (110, 110') présentant un premier capteur (115) pour la détermination d'une première position de déplacement du premier lève-vitre (140, 140'), et un deuxième capteur (116) pour la détermination d'une deuxième position de déplacement du deuxième lève-vitre (240, 240'),
**caractérisé**
- **en ce que** le premier capteur (115) et le deuxième capteur (116) reposent sur des principes d'action physiques différents,
- **en ce que** le premier capteur (115) repose sur un principe d'action magnétique, et le deuxième capteur (116) sur un principe d'action résistif électrique, et/ou le premier capteur (115) relève un mouvement de rotation du premier entrainement (100, 100'), et le deuxième capteur (116) relève un signal modulé sur un courant d'entrainement et/ou une tension d'entrainement du deuxième entrainement (200, 200'), et
- **en ce que** le dispositif de commande (110) est agencé avec le premier entrainement (100), dans une première portière de véhicule (11), et le deuxième entrainement (200) commandé par le dispositif de commande (110), est agencé à l'écart du dispositif de commande (110), à l'extérieur de la première portière de véhicule (11).

2. Système de commande pour un premier dispositif de déplacement (140, 140') destiné à déplacer une première partie déplaçable d'un véhicule automobile à l'aide d'un premier entrainement (100, 100') du système de commande, et pour un deuxième dispositif de déplacement (240, 240') destiné à déplacer une deuxième partie déplaçable du véhicule automobile à l'aide d'un deuxième entrainement (200, 200') du système de commande, le système comprenant
- un dispositif de commande (110, 110'), qui, pour l'alimentation en courant, est relié électriquement aussi bien au premier entraînement (100, 100') qu'au deuxième entrainement (200, 200'), le dispositif de commande (110, 110') présentant un premier capteur (115) pour la détection d'une première collision de la première partie déplaçable (140, 140'), et un deuxième capteur (116) pour la détection d'une deuxième collision de la deuxième partie déplaçable (240, 240'),
**caractérisé**
- **en ce que** le premier capteur (115) et le deuxième capteur (116) reposent sur des principes d'action physiques différents,
- **en ce que** le premier capteur (115) repose sur un principe d'action magnétique, et le deuxième capteur (116) sur un principe d'action résistif électrique, et/ou le premier capteur (115) relève un mouvement de rotation du premier entrainement (100, 100'), et le deuxième capteur (116) relève un signal modulé sur un courant d'entrainement et/ou une tension d'entrainement du deuxième entrainement (200, 200'), et
- **en ce que** le dispositif de commande (110) est agencé avec le premier entrainement (100), dans une première portière de véhicule (11), et le deuxième entrainement (200) commandé par le dispositif de commande (110), est agencé à l'écart du dispositif de commande (110), à l'extérieur de la première portière de véhicule (11).

3. Système de commande selon l'une au moins des revendications 1 ou 2, dans lequel le premier capteur (115) et le deuxième capteur (116) sont agencés sur un seul support de circuit, notamment sur une seule plaque de circuit imprimé (119) du dispositif de commande (110).

4. Système de commande selon l'une des revendications précédentes, dans lequel le dispositif de commande (110, 110') comprend un premier circuit d'attaque de puissance (117) pour commander un premier courant d'entrainement du premier entrainement (100, 100'), et un deuxième circuit d'attaque de puissance (118) pour commander un deuxième courant d'entrainement du deuxième entrainement (200, 200').

5. Système de commande selon l'une des revendications précédentes, dans lequel le dispositif de commande (110) comprend une unité de calcul (114), notamment un microcontrôleur, qui est reliée au premier capteur (115) et au deuxième capteur (116), et est notamment conçue pour le traitement simultané dans le temps des données du premier capteur (115) et du deuxième capteur (116).

6. Système de commande selon la revendication 5, dans lequel l'unité de calcul (114) est conçue
- pour la détection d'une première collision de la première vitre avec un objet ou une partie du corps à l'intérieur d'une première plage de déplacement du premier lève-vitre (140, 140') en fonction d'un signal de capteur du premier capteur (115), et
- pour la détection d'une deuxième collision de la deuxième vitre avec un objet ou une partie du corps à l'intérieur d'une deuxième plage de déplacement du deuxième lève-vitre (240, 240') en fonction d'un signal de capteur du deuxième capteur (116).

7. Système de commande selon la revendication 6, dans lequel l'unité de calcul (114) est conçue pour commander un déplacement simultané, notamment un déplacement automatique, du premier entrainement (100, 100') et du deuxième entrainement (200, 200').

8. Système de commande selon l'une des revendications précédentes, dans lequel le dispositif de commande (110) est intégré à un boitier (130) du premier entrainement (100), et dans lequel le dispositif de commande (110) comporte un raccord de connexion électrique (1211) pour le deuxième entrainement (200).

9. Système de commande selon l'une des revendications précédentes, dans lequel le dispositif de commande est agencé dans un boitier séparé, dans la première portière du véhicule automobile, et dans lequel le dispositif de commande comporte un raccord de connexion électrique pour le premier entrainement (100) et le deuxième entrainement (200).

10. Système de commande selon l'une des revendications précédentes, dans lequel le dispositif de commande (110) est relié, par l'intermédiaire d'un bus (1100), à un autre dispositif électrique du véhicule automobile, notamment à un autre dispositif de commande (110') pour l'alimentation en courant d'un entrainement de lève-vitre (100').
